# EUROPÄISCHE PATENTSCHRIFT

(11) **EP 1 063 120 B1**
(45) Veröffentlichungstag und Bekanntmachung des Hinweises auf die Patenterteilung: **27.10.2004**
(21) Anmeldenummer: 00112749.7
(22) Anmeldetag: 16.06.2000
(51) Int. Cl.: B60K 41/00, B60K 6/04, F16H 59/78, F01N 3/20

(54) **Antriebsstrang eines Hybridkraftfahrzeuges**
Drive system for hybrid vehicle
Système de propulsion pour un véhicule hybride

(30) Priorität: 25.06.1999 DE 19929218
(43) Veröffentlichungstag der Anmeldung: 27.12.2000
(73) Patentinhaber: MAN Nutzfahrzeuge Aktiengesellschaft, 80976 München (DE)
(72) Erfinder: Schaller, Viktor, Dr.-Ing., 82194 Gröbenzell (DE); Lexen, Gerald, Dipl.-Ing., 80995 München (DE); Kerschl, Stefan, Dr.-Ing., 85402 Kranzberg (DE); von Schubert, Andreas, Dipl.-Ing., 81247 München (DE)

(56) Entgegenhaltungen:
- EP-A- 0 477 082
- EP-A- 0 511 654
- EP-A- 0 570 234
- US-A- 5 327 992
- US-A- 5 785 137
- US-A- 6 032 753

## Beschreibung

Die Erfindung betrifft einen Antriebsstrang eines Kraftfahrzeuges, insbesondere eines Lastkraftwagens oder Omnibusses.

Aufgrund der stetigen Zunahme des Verkehrs in städtischen und stadtnahen Bereichen wird immer mehr Wert auf eine umweltschonende Verkehrsbedienung gelegt. Um auch den zukünftigen europäischen Grenzwerten für Schadstoffausstoß von Kraftfahrzeugen zu genügen, ist eine gezielte Weiterentwicklung der Fahrzeugtechnik im Hinblick auf eine Verbrauchs- und Emissionsminderung notwendig.

Aus der EP 0 830 968 A1 ist ein Verfahren zum Betrieb eines nicht spurgebundenen Hybridfahrzeuges bekannt, das bei einer anstehenden Drehzahländerung des Verbrennungsmotors vorsieht, eine Batterie, unabhängig von der auf die Antriebsräder zu übertragenden Leistung, gezielt so zu laden oder zu entladen, dass die Drehzahländerung möglichst rasch erfolgt und hinsichtlich Kraftstoffverbrauch, Schadstoffemission, Lärmbildung und/oder Maschinenschonung optimale Arbeitspunkte durchlaufen werden. Es ist einerseits im Fall einer anstehenden Leistungserhöhung des Verbrennungsmotors vorgesehen, die Batterie je nach Ausgangslage stärker zu entladen oder weniger stark zu laden und im Fall einer anstehenden Leistungsreduktion stärker zu laden oder weniger stark zu entladen.

Aus der US 60 32 753 B bzw. der JP 0932 9060 A ist eine Vorrichtung zur Steuerung einer Katalysatortemperatur für ein Hybridfahrzeug bekannt. Diese Vorrichtung sieht vor, die Abgase eines Verbrennungsmotors nicht mehr durch den Katalysator zu leiten, sobald die Abgastemperaturen unter einen vorgegebenen Grenzwert absinken. Stattdessen wird ein Rückflussventil geöffnet, das dafür sorgt, dass die Abgase einem Ansaugtrakt zugeführt werden. Hierdurch soll erreicht werden, dass die katalytische Wirkung des Katalysators auch dann aufrecht erhalten wird, wenn die den Motor verlassenden Abgase eine sehr niedrige Abgastemperatur aufweisen.

Aus der EP 0 570 234 A1 ist ein Steuerungsverfahren für ein Hybridfahrzeug bekannt, das einen elektrischen Antriebsmotor als Fahrantrieb und einen Verbrennungsmotor zur Energieversorgung aufweist. Ein Fahrrechner steuert eine Vielzahl von Komponenten des Hybridantriebs, unter anderem eine Heizeinrichtung für einen Katalysator. Diese Heizeinrichtung kann aktiviert werden, sobald die Katalysatortemperaturen unter einen vorgegebenen Wert abfallen.

Es ist Aufgabe der Erfindung, die Funktionsweise eines in einem Kraftfahrzeug vorgesehenen Antriebsstranges sowohl hinsichtlich seines Kraftstoffverbrauchs als auch seines Emissionsverhaltens umweltfreundlich zu optimieren.

Diese Aufgabe wird erfindungsgemäß durch die Merkmale des Anspruchs 1 gelöst.

Durch die erfindungsgemäße, zugleich erfolgende verbrauchsoptimierte sowie emissionsoptimierte Auslegung eines durch die nachfolgend genannte Komponenten-Kombination dargestellten Antriebsstranges eines Kraftfahrzeuges kann dessen Potential hinsichtlich Treibstoffeinsparung, Schadstoff- und Geräuschreduzierung in vorteilhafter Weise ausgeschöpft werden.

Der erfindungsgemäße Antriebsstrang umfasst eine Kombination antriebstechnisch miteinander zusammenwirkender Komponenten, welche im wesentlichen einen Verbrennungsmotor, eine elektrische Motor-Generator-Einheit, einen elektrischen Energiespeicher, ein Getriebe, wenigstens eine Kupplung zur Kraftübertragung einer Antriebsenergie auf antreibbare Fahrzeugräder, einen Fahrzeugrechner, ein Antriebsstrang-Management, komponentenspezifische Elektroniken, sowie ein zusätzliches, aktives Abgasnachbehandlungssystem aufweisen, wobei zwecks Erzielung einer zugleich erfolgenden emissions- und verbrauchsreduzierten Arbeitsweise des gesamten Antriebsstranges sämtliche Komponenten inklusive das aktive Abgasnachbehandlungssystem mit dem Fahrzeugrechner verbunden und über diesen von dem Antriebsstrang-Management her mittels hiervon ausgehender Steuersignale regel- und steuerbar sind.

Ein solcherart festgelegter Antriebsstrang eines Kraftfahrzeuges, beispielsweise eines Verteiterlastkraftwagens oder eines Omnibusses, ist somit sowohl verbrauchsals auch emissionsoptimiert ausgelegt und kann hinsichtlich seiner Betriebsstrategie entsprechend definiert werden. Um den Zielkonflikt zwischen Emissions- und Verbrauchsreduzierung zu überbrücken, wird das Optimierungspotential des Antriebsstranges in dieser Hinsicht ausgeschöpft und durch den zusätzlichen Einsatz eines aktiven Abgasnachbehandlungssystems ergänzt. Zwecks Emissionsreduzierung können sowohl Schadstoffe unter Einbeziehung des Abgasnachbehandlungssystems als auch vermeidbare Lärmbildungen durch beispielsweise Regelung der Drehzahlen des Verbrennungsmotors umweltfreundlich vermindert werden. Ein bedarfsgerechter, optimierter Einsatz von Nebenaggregaten führt zu einer Verbrauchsreduzierung und einer geringeren Schallabstrahlung des Fahrzeuges. Die Abschaltung des Verbrennungsmotors während des Fahrzeugstillstands durch eine Start-Stopp-Automatik kann durch Vermeidung des Motorleerlaufs eine überproportionale Minderung der Abgasemission ermöglichen.

Gemäß einer weiteren Ausgestaltung der Erfindung kann der Anteil der emissionsreduzierten Arbeitsweise des Antriebsstranges im wesentlichen unter funktioneller Einbeziehung des aktiven Abgasnachbehandlungssystems erzielt sein, welches über vom Antriebsstrang-Management auf den Fahrzeugrechner und an eine Elektronik weitergegebene Steuersignale aktiv in seinem Verhalten steuerbar ist. Des weiteren können durch das Antriebsstrang-Management wenigstens Temperaturzustände des Abgasnachbehandlungssystems steuer- und regelbar sein.

Gemäß einer weiteren Ausgestaltung der Erfindung kann die Steuerung und/oder Regelung des Abgasnachbehandlungssystems durch Änderung hierin einzubringender Einspritzmengen eines Reduktionsstoffes, beispielsweise eines Harnstoffes, und/oder der zeitweisen Einspritzung zusätzlicher Additive in das Abgasnachbehandlungssystem zur Herabsetzung dessen Regenerationstemperatur und/oder durch Aufheizen des Abgasnachbehandlungssystems und/oder durch Aufheizen der Abgase über entsprechend angeordnete Heizvorrichtungen realisiert sein. Als Heizvorrichtung kann beispielsweise ein elektrischer Heizkatalysator vorgesehen sein. Gegebenenfalls kann zwecks Realisierung einer emissionsreduzierten Arbeitsweise des Antriebsstranges eine entsprechende Steuer- und Regelung des Getriebes gegeben sein.

Gemäß einer weiteren Ausgestaltung der Erfindung können die komponentenspezifischen Elektroniken über ein gemeinsames Datenbussystem kommunizierend miteinander verbunden sein, wobei jeweils eine separate Elektronik für das Abgasnachbehandlungssystem, für die elektrische Motor-Generator-Einheit und für das Getriebe vorgesehen ist. Alternativ hierzu können die separaten Elektroniken zu einer gemeinsamen Elektronik zusammengefasst sein.

Gemäß einer weiteren Ausgestaltung der Erfindung kann das mit dem Verbrennungsmotor verbundene Abgasnachbehandlungssystem zwecks Optimierung des Kaltstartverhaltens und Minimierung der Emissionen des Verbrennungsmotors bedarfsweise mit einer elektrischen Energie aufheizbar sein, die in der elektrischen Motor-Generator-Einheit erzeugbar und/oder aus dem elektrischen Energiespeicher bereitstellbar ist, wobei durch das Antriebsstrang-Management - in Abhängigkeit von hierin eingespeicherten Kennfeldern und Parametern - eine notwendige Heizleistung für das Abgasnachbehandlungssystem ermittelbar und über das Antriebsstrang-Management, den Fahrzeugrechner, das Datenbussystem und deren komponentenspezifischen Elektroniken und einem Energiespeicher-Management von der Motor-Generator-Einheit und/oder dem elektrischen Energiespeicher anforderbar ist.

Gemäß einer weiteren Ausgestaltung der Erfindung kann das Getriebe ein automatisiertes oder ein automatisches Getriebe sein.

Des weiteren kann die Elektronik des Getriebes für dieses ein Schaltprogramm aufweisen, wobei dieses Schaltprogramm abhängig von einer aktuellen Temperatur des Abgasnachbehandlungssystems änderbar ist.

Des weiteren kann die aktuelle Temperatur des Abgasnachbehandlungssystems von dessen Elektronik signalmäßig an das Antriebsstrang-Management ausgebbar sein, von welchem signalmäßig das Schaltprogramm der Elektronik des Getriebes ansteuerbar ist.

Gemäß einer weiteren Ausgestaltung der Erfindung kann das Antriebsstrang-Management eine autonome Funktionsweise aufweisen, und zusätzlich mittels fahrzeuginterner Schaltelemente und/oder fahrzeugexterner Schaltsignale verkehrs- bzw. umweltorientiert beeinflussbar sein.

Gemäß einer weiteren Ausgestaltung der Erfindung können die fahrzeuginternen Schaltelemente durch Schalter und die fahrzeugexternen Schaltsignale durch Telematik-Informations-Sender gegeben sein.

Gemäß einer weiteren Ausgestaltung der Erfindung kann die elektrische Motor-Generator-Einheit zum emissionsfreien Start des Verbrennungsmotors und/oder zum kurzfristigen Antreiben des Fahrzeuges und/oder motorfem angeordneter Aggregate Energie aus dem elektrischen Energiespeicher beziehen.

Gemäß einer weiteren Ausgestaltung der Erfindung kann ein den komponentenspezifischen Elektroniken zugehöriges Energiespeicher-Management eine für den Startund/oder den Kurzbetrieb der Motor-Generator-Einheit und/oder der Aggregate ausreichende Restenergie im Energiespeicher garantieren.

Gemäß einer weiteren Ausgestaltung der Erfindung können als Aggregate Nebenaggregate und/oder optionale Zusatzaggregate vorgesehen sein, welche über den elektrischen Energiespeicher bei eingeschaltetem und/oder abgeschaltetem Verbrennungsmotor mit Energie versorgbar sind. Als Zusatzaggregate können spezielle Aufbauaggregate wie z. B. Kühlaggregate oder Elektronikantriebe vorgesehen sein.

Gemäß einer weiteren Ausgestaltung der Erfindung kann von dem Fahrzeugrechner und/oder dem Antriebsstrang-Management her der Verbrennungsmotor bei verkehrsbedingten Stopps des Fahrzeuges und bei Schub- und Leerlaufbetrieb zusätzlich über eine, den komponentenspezifischen Elektroniken zugehörige EDC-(Electronic-Diesel-Control) ausschaltbar sein. Des weiteren kann der Verbrennungsmotor bei Betätigung eines fahrzeugseitigen Bedienelementes und/oder bei Aktivierung eines sicherheitsrelevanten Signals aus dem Fahrzeugrechner und/oder dem Antriebsstrang-Management durch die elektrische Motor- Generator-Einheit mit Energie aus dem elektrischen Energiespeicher startbar sein.

Gemäß einer weiteren Ausgestaltung der Erfindung kann in der Motor-Generator-Einheit bei Fahrzeugbremsung eine Bremsenergie zu elektrischer Energie umwandelbar sein, welche im elektrischen Energiespeicher speicherbar ist. Des weiteren kann der aktuelle Ladezustand des elektrischen Energiespeichers durch das Energiespeicher-Management überwachbar sein. Des weiteren kann bei Erreichen eines maximalen Ladegrads des elektrischen Energiespeichers - bei gleichbleibender Betätigungskraft an einem Bremspedal - eine Bremskraft stufenlos mittels des Antriebsstrang-Management von der Motor-Generator-Einheit zu einem EBS-Bremssystem (Electronic-braking-System) leitbar sein.

Gemäß einer weiteren Ausgestaltung der Erfindung kann zwecks optimierter Bremsenergie-Rückgewinnung mittels der elektrischen Motor-Generator-Einheit und des Energiespeichers die zu- oder abschaltbaren Kupplungen unterschiedlich schnell ansteuerbar sein. Des weiteren können die Schließgeschwindigkeiten der Kupplungen vom Antriebsstrang-Management mittels über den Fahrzeugrechner und dem Datenbussystem kommender Signale regelbar sein, wobei hierfür im Antriebsstrang-Management entsprechende Parameter abgelegt sind. Des weiteren kann während des Betätigungsvorganges der Kupplungen die Rückgewinnung der Bremsenergie deaktiviert sein.

Gemäß einer weiteren Ausgestaltung der Erfindung kann das Getriebe zwecks Realinierung hoher Schließgeschwindigkeiten der Kupplungen durch die Motor-Generator-Einheit synchronisierbar sein, wobei elektrische Energie zwischen der Motor-Generator-Einheit und dem elektrischen Energiespeicher austauschbar ist. Des weiteren kann zur Synchronisierung des Getriebes zu diesem ein elektrisches Signal vom Antriebsstrang-Management über den Fahrzeugrechner und das Datenbussystem sendbar sein, wobei dieses Signal innerhalb des Antriebsstrang-Managements in Abhängigkeit von einer Stellung eines Gangwahlhebels ermittelbar ist. Des weiteren kann zwecks Synchronisierung und Schließung der Kupplungen eine direkte Signalübermittlung zwischen der Elektronik, der Motor-Generator-Einheit und der Elektronik des Getriebes gegeben sein.

Gemäß einer weiteren Ausgestaltung der Erfindung können als elektrische Energiespeicher Akkumulatoren und/oder Superkondensatoren vorgesehen sein. Des weiteren kann der elektrische Energiespeicher gegebenenfalls durch Brennstoffzellen ergänzt sein.

Gemäß einer weiteren Ausgestaltung der Erfindung kann eine Kupplung zwischen der Motor-Generator-Einheit und dem Getriebe angeordnet sein. Des weiteren kann optionale Kupplung zwischen dem Verbrennungsmotor und der Motor-Generator-Einheit angeordnet sein. Des weiteren kann die Motor-Generator-Einheit entweder koaxial oder radial versetzt zu einer Kurbelwelle des Verbrennungsmotors anordbar sein.

Gemäß einer weiteren Ausgestaltung der Erfindung kann eine Abschaltung des Verbrennungsmotors während des Stillstandes des Fahrzeuges sowie bei Schubund Leerlaufbetrieb des Verbrennungsmotors durch eine Start-Stopp-Automatik realisierbar sein.

Gemäß einer weiteren Ausgestaltung der Erfindung kann die Funktion des Antriebsstrang-Managements der Funktion des Fahrzeugrechners hierarchisch übergeordnet sein.

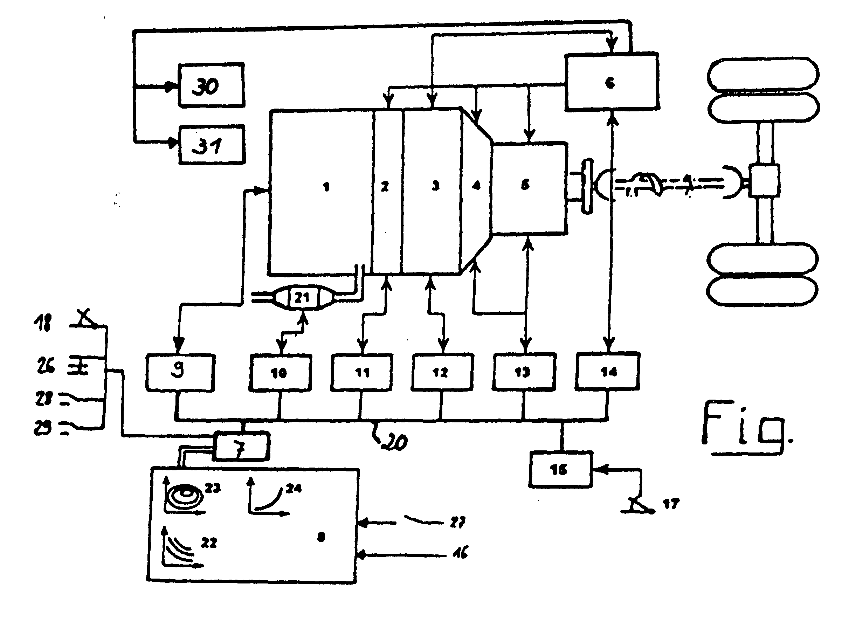

Nachstehend ist die erfindungsgemäße Lösung an Hand eines in der Zeichnung dargestellten Ausführungsbeispieles noch näher erläutert.

In der nachstehend beschriebenen Zeichnung zeigt die Figur anhand einer Prinzipskizze die Komponenten eines Antriebsstranges eines Kraftfahrzeuges.

Der in der Figur anhand einer Prinzipskizze dargestellte Antriebsstrang eines Kraftfahrzeuges, beispielsweise eines Lastkraftwagens oder Omnibusses, besteht im wesentlichen aus den schematisch dargestellten Komponenten eines Verbrennungsmotors 1, einer optionalen Kupplung 2, einer Motor-Generator-Einheit 3, einer Kupplung 4 und einem Getriebe 5, das über eine hier nicht mit Bezugszeichen versehene Antriebswelle mit antreibbaren Fahrzeugrädem in Verbindung steht. Das Getriebe 5 kann als automatisiertes oder als automatisches Getriebe ausgeführt sein. Des weiteren ist ein elektrischer Energiespeicher 6 vorgesehen, der über hier nicht mit Bezugszeichen versehenen elektrischen Verbindungsleitungen mit der optionalen Kupplung 2, der Kupplung 4 und dem Getriebe 5 sowie über jeweils eine separate Leitung mit der Motor-Generator-Einheit 3 und einem Energiespeicher-Management 14 verbunden ist. In der hier gezeigten Version ist die Motor-Generator-Einheit 3 koaxial zu einer Kurbelwelle des Verbrennungsmotors 1 und/oder einem Eingang des Getriebes 5 angeordnet. Die solcherart angeordnete Motor-Generator-Einheit 3 kann beispielsweise durch einen Kurbelwellengenerator-/motor oder dergleichen gegeben sein. Gemäß einer anderen, hier nicht gezeigten Version kann die Motor-Generator-Einheit 3 bezüglich einer Kurbelwelle des Verbrennungsmotors 1 und/oder einer Eingangswelle des Getriebes 5 radial versetzt und über ein entsprechendes Übertragungsglied mit der Kurbelwelle und/oder der Eingangswelle verbunden sein.

Des weiteren ist an dem Verbrennungsmotor 1, der beispielsweise als Dieselmotor ausführbar ist, ein separates Abgasnachbehandlungssystem 21 angeschlossen, das mit einer Elektronik 10 in Verbindung steht. Die optionale Kupplung 2 ist mit einer entsprechenden Elektronik 11 verbunden. Die Motor-Generator-Einheit 3 steht mit einer Elektronik 12 in Verbindung. Die Kupplung 4 und das Getriebe 5 ist an eine gemeinsame Elektronik 13 angeschlossen. Alternativ hierzu können die Kupplung 4 und das Getriebe 5 jeweils mit separaten, hier nicht dargestellten Elektroniken verbunden sein, welche über ein Datenbussystem 20 aneinander angeschlossen sind. Das Datenbussystem 20 kann beispielsweise durch ein CAN (Controller-Area-Network) gegeben sein. Der Verbrennungsmotor 1 steht mit einer EDC (Electronic-Diesel-Control) 9 in Verbindung, welche über das Datenbussystem 20 mit einem Fahrzeugrechner 7 verbunden ist. Am Eingang des Fahrzeugrechners 7 liegen die hier nicht mit Bezugszeichen versehenen Zuleitungen von Sensoren eines Fahrpedals 18, eines Gangwahlhebels 26 sowie optionaler Betriebsarten-Wahlschalter 28, 29 an. Diese sind in der hier gezeigten Version als ein für die Betriebsmodi "vorwärts" und "rückwärts" vorgesehener optionaler Betriebsarten-Wahlschalter 28 sowie als ein für die automatische oder manuelle Gangwahl vorgesehener optionaler Betriebsarten-Wahlschalter 29 gegeben.

Ausgangsseitig steht der Fahrzeugrechner 7 über das Datenbussystem 20 sowohl mit den Elektroniken 10, 11, 12, 13 als auch mit dem Energiespeicher-Management 14 und einem Bremssystem EBS (Electronic-braking-System) 15 in Verbindung. Das Bremssystem EBS 15 steht mit einer vom Bremspedal 17 kommenden Zuleitung in Verbindung. Der Fahrzeugrechner 7 steht mit einem Antriebsstrang-Management 8 in Verbindung, das bedarfsweise mit einem fahrzeuginternen Schaltelement 27 und/oder mittels fahrzeugexternen Schaltsignalen 16 verkehrsorientiert beeinflussbar ist. Innerhalb des Antriebsstang-Managements 8 sind verschiedene Daten, wie beispielsweise ein Emissionskennfeld 22, ein Verbrauchskennfeld 23 sowie ein Temperaturkennfeld 24 abgespeichert. Der Antriebsstrang des Nutzfahrzeuges weist eine nachfolgend beschriebene Funktionsweise auf:

Die Motor-Generator-Einheit 3 startet den Verbrennungsmotor 1 emissionsfrei mittels Energie, die aus dem elektrischen Energiespeicher 6 zur Verfügung stellbar ist. Das Energiespeicher-Management 14 garantiert eine minimale Restenergie im Energiespeicher 6, welche für den Startvorgang des Verbrennungsmotors 1 und bedarfsweise auch für einen kurzen elektrischen Antrieb sowohl des Fahrzeuges als auch gegebenenfalls motorfem angeordneter Nebenaggregate ausreichend ist. Der Verbrennungsmotor 1 ist bei verkehrsbedingten Stops sowie bei Schub- und Leerlaufbetrieb über die EDC 9 und dem Fahrzeugrechner 7 von dem Antriebsstrang-Management 8 ausschaltbar. Bei Betätigung des Fahrpedals 18 kann der Verbrennungsmotor 1 durch die Motor-Generator-Einheit 3 mittels der Energie aus dem elektrischen Energiespeicher 6 gestartet werden. Die Kommunikation der jeweiligen Elektroniken 12, 13 erfolgt über das Datenbussystem 20. Im Anlassvorgang des Verbrennungsmotors 1 und kurz danach wird das Abgasnachbehandlungssystem 21 mittels elektrischer Energie, die in der Motor-Generator-Einheit 3 erzeugbar oder aus dem elektrischen Energiespeicher 6 bereitstellbar ist, aufgeheizt, um ein optimiertes Kaltstartverhalten des Verbrennungsmotors 1 mit minimierten Emissionen zu realisieren. Zusätzlich kann das Aufheizen des Abgasnachbehandlungssystems 21 über weitere, hierfür geeignete Zeitphasen ausgedehnt werden. Abhängig vom Emissionskennfeld 22 des Verbrennungsmotors 1 und dem Temperaturkennfeld 24 des Abgasnachbehandlungssystems 21 wird die notwendige Heizleistung vom Antriebsstrang-Management 8 ermittelt und über den Fahrzeugrechner 7 und das Datenbussystem 20 entsprechende Daten an die Elektronik 10 des Abgasnachbehandlungssystems 21 und an das Energiespeicher-Management 14 übermittelt.

Die elektrische Motor-Generator-Einheit 3 bezieht zum emissionsfreien Start des Verbrennungsmotors 1 und/oder zum kurzfristigen Antreiben des Fahrzeuges Energie aus dem elektrischen Energiespeicher 6.

Des weiteren kann die Motor-Generator-Einheit 3 im elektrischen Energiespeicher 6 ausreichend Energie für den elektrischen Antrieb von weiteren Aggregaten 30, 31 zur Verfügung stellen. Diese Aggregate 30, 31 können motorfem verbaut und leistungsoptimal mit minimierter Einschaltdauer angetrieben sein. Ein den komponentenspezifischen Elektroniken 9 bis 15 zugehöriges Energiespeicher-Management 14 garantiert eine für den Start- und/oder den Kurzbetrieb der Motor-Generator-Einheit 3 und/oder der Aggregate 30, 31 ausreichende Restenergie im elektrischen Energiespeicher 6. Als Aggregate 30, 31 können Nebenaggregate 30 und/oder optionale Zusatzaggregate 31 vorgesehen sein, welche über den elektrischen Energiespeicher 6 bei eingeschaltetem und/oder abgeschaltetem Verbrennungsmotor 1 mit Energie versorgbar sind. Einzelne Nebenaggregate 30, wie z. B. Anlasser und Lichtmaschine können durch den Einsatz der Motor-Generator-Einheit 3 und des elektrischen Energiespeichers 6 ersatzlos entfallen.

Die Bremsenergie kann in der Motor-Generator-Einheit 3 zur elektrischen Energie umgewandelt werden, wobei diese im elektrischen Energiespeicher 6 speicherbar ist. Das Energiespeicher-Management 14 überwacht den aktuellen Ladezustand des elektrischen Energiespeichers 6. Bei Erreichen des maximalen Ladegrads leitet das Antriebsstrang-Management 8 stufenlos die Bremskraft von der Motor-Generator-Einheit 3 zum Bremssystem EBS 15 bei gleichbleibender Kraft am Bremspedal 17.

Abhängig von dem Zu- oder Abschalten der Bremsenergie-Rückgewinnung werden die Kupplungen 2, 4 unterschiedlich schnell angesteuert, um ein optimales Ausnützen der Bremsenergie zur Rückspeisung in den elektrischen Energiespeicher 6 durch die Motor-Generator-Einheit 3 zu gewährleisten. Das Antriebsstrang-Management 8 entscheidet anhand von abgelegten Parametern und anhand von Daten des Energiespeicher-Managements 14 und der Elektronik 12 der Motor-Genertor-Einheit 3 über die Schließgeschwindigkeit der Kupplungen 2, 4 und sendet entsprechende Signale über den Fahrzeugrechner 7 und das Datenbussystem 20 an die Kupplungen 2, 4. Während des Kupplungsvorganges ist die Bremsenergie-Rückgewinnung deaktiviert.

Um hohe Schließgeschwindigkeiten der Kupplungen 2, 4 realisieren zu können, synchronisiert die Motor-Generator-Einheit 3 das Getriebe 5, wobei Energie zwischen der Motor-Generator-Einheit 3 und dem elektrischen Energiespeicher 6 ausgetauscht wird. Der Befehl zum Synchronisieren kommt über den Fahrzeugrechner 7 und das Datenbussystem 20 vom Antriebsstrang-Management 8, in Abhängigkeit von der Hebelstellung des Gangwahlhebels 26 und der Schaltstellung der jeweiligen optionalen Betriebsarten-Wahlschalter 28, 29. Die Synchronisierung und das Schließen der Kupplungen 2, 4 erfolgt in direkter Kommunikation der Elektronik 12 der Motor-Generator-Einheit 3 mit der Elektronik 13 des Getriebes 5.

Das Schaltprogramm des Getriebes 5 wird abhängig von der Temperatur des Abgasnachbehandlungssystems 21 geändert. Die Temperatur des Abgasnachbehandlungssystems 21 wird von dessen Elektronik 10 an das Antriebsstrang-Management 8 ausgegeben. Das Antriebsstrang-Management 8 entscheidet über die Wahl des Schaltprogramms und gibt entsprechende Signale an die Elektronik 13 des Getriebes 5 weiter.

Das Antriebsstrang-Management 8 weist eine autonome Funktionsweise auf und ist zusätzlich mittels fahrzeuginterner Schaltelemente 27 und/oder fahrzeugexterner Schaltsignale 16 verkehrsorientiert beeinflussbar. Die fahrzeuginternen Schaltelemente 27 können durch herkömmliche Schalter und die fahrzeugextemen Schaltsignale 16 können durch herkömmliche Telematik-Informations-Sender gegeben sein. Bei Vorsehen letzterer kann bei Einfahren des Fahrzeuges in emissionsbelastete Zonen, z. B. in eine Innenstadt, durch die von einem externen Telematik-Informations-Sender 16 ausgesendeten Funksignale über das Antriebsstrang-Management 8 verkehrsbedingt Einfluss auf die Funktionsweise des Antriebsstranges genommen werden.

Die vom Fahrpedal 18, vom Gangwahlhebel 26 und den optionalen Betriebsarten-Wahischattem 28, 29 kommenden Signale werden entweder direkt dem Fahrzeugrechner 7 zur Verfügung gestellt oder indirekt über einen weiteren, hier nicht dargestellten Rechner und eine Verbindung zum Datenbussystem dem Fahrzeugrechner 7 übermittelt.

Das Getriebe 5 kann als automatisches oder als automatisiertes Getriebe ausgeführt sein. Das Datenbussystem 20 kann beispielsweise durch ein Triebstrang-CAN (Controller-Area-Network) oder dergleichen gegeben sein.

## Patentansprüche

1. Antriebsstrang eines Kraftfahrzeuges, im wesentlichen bestehend aus antriebstechnisch miteinander zusammenwirkenden Komponenten wie einem Verbrennungsmotor (19), einer elektrischen Motor-Generator- Einheit (3), einem elektrischen Energiespeicher (6), einem Getriebe (5), wenigstens einer Kupplung (2, 4), einem Fahrzeugrechner (7), einem Antriebsstrang- Management (8) sowie komponentenspezifischen Elektroniken (9 bis 15), wobei den antriebstechnisch zusammenwirkenden Komponenten des Antriebsstranges ein zusätzliches, aktives Abgasnachbehandlungssystem (21) zugeordnet ist, wobei zwecks Erzielung einer zugleich erfolgenden emissions- und verbrauchsreduzierten Arbeitsweise des gesamten Antriebsstranges sämtliche Komponenten (1, 2, 3, 4, 5, 6), inklusive das aktive Abgasnachbehandlungssystem (21) mit dem Fahrzeugrechner (7) verbunden und über diesen von dem Antriebsstrang-Management (8) her mittels hiervon ausgesendeter Steuersignale regel- und steuerbar sind, **dadurch gekennzeichnet, dass** das Getriebe (5) ein automatisiertes oder ein automatisches Getriebe ist, und dass eine Elektronik (13) vorgesehen ist, die ein Schaltprogramm für das Getriebe (5) aufinreist, wobei das Schaltprogramm abhängig von einer aktuellen Temperatur des Abgasnachbehandlungssystems (21) änderbar ist, und dass die aktuelle Temperatur des Abgasnachbehandlungssystems (21) von dessen Elektronik (10) signalmäßig an das Antriebsstrang-Management (8) ausgebbar ist, von welchem signalmäßig das Schaltprogramm der Elektronik (13) des Getriebes (5) ansteuerbar ist.

2. Antriebsstrang nach Anspruch 1, **dadurch gekennzeichnet, dass** der Anteil der emissionsreduzierten Arbeitsweise des Antriebsstranges im wesentlichen unter funktioneller Einbeziehung des aktiven Abgasnachbehandlungssystems (21) erzielt ist, welches über vom Antriebsstrang-Management (8) an den Fahrzeugrechner (7) und an eine Elektronik (10) des Abgasnachbehandlungssystems (21) weitergegebene Steuersignale aktiv in seinem Arbeitsverhalten steuerbar ist, und dass durch das Antriebsstrang-Management (8) wenigstens Temperaturzustände des Abgasnachbehandlungssystems (21) steuer- und regelbar sind.

3. Antriebsstrang nach einem der Ansprüche 1 und 2, **dadurch gekennzeichnet, dass** die Steuerung und/oder Regelung des Abgasnachbehandlungssystems (21) durch Änderung hierin einzubringender Einspritzmengen eines Reduktionsstoffes realisiert ist.

4. Antriebsstrang nach Anspruch 1 oder 2, **dadurch gekennzeichnet, dass** die Steuerung und/oder Regelung des Abgasnachbehandlungssystems (21) durch zeitweise Einspritzung zusätzlicher Additive in das Abgasnachbehandlungssystem (21) zur Herabsetzung dessen Regenerationstemperatur realisiert ist.

5. Antriebsstrang nach Anspruch 1 oder 2, **dadurch gekennzeichnet, dass** die Steuerung und/oder Regelung des Abgasnachbehandlungssystems (21) durch Aufheizen des Abgasnachbehandlungssystems (21) realisiert ist.

6. Antriebsstrang nach Anspruch 1 oder 2, **dadurch gekennzeichnet, dass** die Steuerung und/oder Regelung des Abgasnachbehandlungssystems (21) durch Aufheizen der Abgase über entsprechend angeordnete Heizvorrichtungen realisiert ist.

7. Antriebsstrang nach einem der Ansprüche 1 bis 6, **dadurch gekennzeichnet, dass** die komponentenspezifischen Elektroniken ( 9 bis 15) über ein gemeinsames Datenbussystem (20) kommunizierend miteinander verbunden sind, wobei die Elektronik (10) für das Abgasnachbehandlungssystem (21), eine Elektronik (12) für die elektrische Motor-Generator-Einheit (3) und die Elektronik (13) für das Getriebe (5) vorgesehen ist, und dass das mit dem Verbrennungsmotor (1) verbundene Abgasnachbehandlungssystem (21) zwecks Optimierung des Kaltstartverhaltens und Minimierung der Emissionen des Verbrennungsmotors (1) bedarfsweise mit einer elektrischen Motor-Generator-Einheit (3) erzeugbar und/oder aus dem elektrischen Energiespeicher (6) bereitstellbar ist, wobei durch das Antriebsstrang-Management (8) - in Abhängigkeit von hierin eingespeicherten Kennfeldern (22, 24) und Parametern - eine notwendige Heizleistung für das Abgasnachbehandlungssystem (21) ermittelbar und über das Antriebsstrang-Management (8), den Fahrzeugrechner (7), das Datenbussystem (20) und deren komponentenspezifischen Elektroniken (9 bis 15) und einem Energiespeicher-Management (14) von der Motor-Generator-Einheit (3) und/oder dem elektrischen Energiespeicher (6) anforderbar ist.

8. Antriebsstrang nach einem der Ansprüche 1 bis 7, **dadurch gekennzeichnet, dass** das Antriebsstrang-Management (8) eine autonome Funktionsweise aufweist und zusätzlich mittels fahrzeuginterner Schaltelemente (27) und/oder fahrzeugexterner Schaltsignale (16) verkehrs- bzw. umweltorientiert beeinflussbar ist.

9. Antriebsstrang nach einem der Ansprüche 1 bis 8, **dadurch gekennzeichnet, dass** die fahrzeuginternen Schaltelemente (27) durch Schalter und die fahrzeugexternen Schaltsignale (16) durch Telematik-Informations-Sender gegeben sind, und dass die elektrische Motor-Generator-Einheit (3) zum emissionsfreien Start des Verbrennungsmotors (1) und/oder zum kurzfristigen Antreiben des Fahrzeuges und/oder motorfem angeordneter Aggregate (30, 31) Energie aus dem elektrischen Energiespeicher (6) bezieht, und dass ein den komponentenspezifischen Elektroniken (9 bis 15) zugehöriges Energiespeicher-Management (14) eine für den Start- und/oder den Kurzbetrieb der Motor-Generator-Einheit (3) und/oder der Aggregate (30, 31) ausreichende Restenergie im elektrischen Energiespeicher (6) garantiert, und dass als Aggregate (30, 31) Nebenaggregate (30) und/oder optionale Zusatzaggregate (31) vorgesehen sind, welche über den elektrischen Energiespeicher (6) bei eingeschaltetem und/oder abgeschaltetem Verbrennungsmotor (1) mit Energie versorgbar sind.

10. Antriebsstrang nach einem der Ansprüche 1 bis 9, **dadurch gekennzeichnet, dass** von dem Fahrzeugrechner (7) und/oder dem Antriebsstrang-Management (8) her der Verbrennungsmotor (1) bei verkehrsbedingten Stops des Fahrzeuges und bei Schubund Leerlaufbetrieb zusätzlich über eine, den komponentenspezifischen Elektroniken (9 bis15) zugehörige EDC (Electronic-Diesel-Control) (9) ausschaltbar ist und dass der Verbrennungsmotor (1) bei Betätigung eines fahrzeugseitigen Bedienelementes (17, 18) und/oder bei Aktivierung eines sicherheitsrelevanten Signals aus dem Fahrzeugrechner (7) und/oder dem Antriebsstrang-Management (8) durch die elektrische Motor-Generator-Einheit (3) mit Energie aus dem elektrischen Energiespeicher (6) startbar ist.

11. Antriebsstrang nach einem der Ansprüche 1 und 10, **dadurch gekennzeichnet, dass** in der Motor-Generator-Einheit (3) bei Fahrzeugbremsung eine Bremsenergie zu elektrischer Energie umwandelbar ist, welche im elektrischen Energiespeicher (6) speicherbar ist, und dass der aktuelle Ladezustand des elektrischen Energiespeichers (6) durch das Energiespeicher-Management (14) überwachbar ist, und dass bei Erreichen eines maximalen Ladegrads des elektrischen Energiespeichers (6) - bei gleichbleibender Betätigungskraft an einem Bremspedal (17) - eine Bremskraft stufenlos mittels des Antriebsstrang-Managements (8) von der Motor-Generator-Einheit (3) zu einem EBS-Bremssystem (Elektronik-braking-System) (15) leitbar ist.

12. Antriebstrang nach einem der vorangegangenen Ansprüche1, 10 und 11, **dadurch gekennzeichnet, dass** zwecks optimierter Bremsenergie-Rückgewinnung mittels der elektrischen Motor-Generator-Einheit (3) und des Energiespeichers (6) die zu- oder abschaltbaren Kupplungen (2, 4) unterschiedlich schnell ansteuerbar sind, und dass die Schließgeschwindigkeit der Kupplungen (2, 4) vom Antriebstrang -Management (8) über den Fahrzeugrechner (7) und das Datenbussystem (20) kommender Signale regelbar sind, wobei hierfür im Antriebsstrang-Management (8) entsprechende Parameter (22, 23, 24) abgelegt sind, und dass während des Betätigungsvorganges der Kupplungen (2, 4) die Rückgewinnung der Bremsenergie deaktiviert ist.

13. Antriebsstrang nach einem oder mehreren der vorangegangenen Ansprüche 1 bis 12, **dadurch gekennzeichnet, dass** das Getriebe (5) zwecks Realisierung hoher Schließgeschwindigkeiten der Kupplungen (2, 4) durch die Motor-Generator-Einheit (3) synchronisierbar ist, wobei elektrische Energie zwischen der Motor-Generator-Einheit (3) und dem elektrischen Energiespeicher (6) austauschbar ist, und dass zur Synchronisierung des Getriebes (5) zu diesem ein elektrisches Signal vom Antriebsstrang-Management (8) über den Fahrzeugrechner (7) und das Datenbussystem (20) sendbar ist, wobei dieses Signal innerhalb des Antriebsstrang-Managements (8) in Abhängigkeit von einer Stellung eines Gangwahlhebels (26) ermittelbar ist, und dass zwecks Synchronisierung und Schließung der Kupplungen (2, 4) eine direkte Signalübermittlung zwischen der Elektronik (12), der Motor-Generator-Einheit (3) und der Elektronik (13) des Getriebes (5) gegeben ist.

14. Antriebsstrang nach einem oder mehreren der vorangegangenen Ansprüche 1 bis 13, **dadurch gekennzeichnet, dass** als elektrische Energiespeicher (6) Akkumulatoren und/oder Superkondensatoren vorgesehen sind, und dass der elektrische Energiespeicher (6) gegebenenfalls durch Brennstoffzellen ergänzt ist.

15. Antriebsstrang nach einem oder mehreren der vorgegangenen Ansprüche 1 bis 13, **dadurch gekennzeichnet, dass** eine Kupplung (4) zwischen der Motor-Generator-Einheit (3) und dem Getriebe (5) angeordnet ist, und dass eine optimale Kupplung (2) zwischen dem Verbrennungsmotor (1) und der Motor-Generator-Einheit (3) angeor_{d}net ist, und dass die Motor-Generator-Einheit (3) entweder koaxial oder radial versetzt zu einer Kurbelwelle des Verbrennungsmotors (1) anordbar ist, und dass eine Abschaltung des Verbrennungsmotors (1) während des Stillstandes des Fahrzeuges sowie bei Schub- und Leerlaufbetrieb des Verbrennungsmotors (1) durch eine Start-Stopp-Automatik realisierbar ist.

16. Antriebsstrang nach einem der vorangegangenen Ansprüche 1 bis 13, **dadurch gekennzeichnet, dass** die Funktion des Antriebsstrang-Managements (8) der Funktion des Fahrzeugrechners (7) hierarchisch übergeordnet ist.

## Claims

1. Driveline of a motor vehicle, basically consisting of components interacting with each other in a drive system such as an internal combustion engine (19), an electric motor-generator unit (3), an electric energy storage system (6), a gearbox (5), at least one clutch (2, 4), a vehicle computer (7), a driveline management system (8) and component-specific electronic systems (9 to 15), whereby an additional, active exhaust-gas aftertreatment system (21) is allocated to the interacting drive system, components, whereby in order to achieve a simultaneous emission and consumption-reducing working mode for the entire driveline all components (1, 2, 3, 4, 5, 6) induding the active exhaust-gas aftertreatment system (21) are connected to the vehicle computer (7) and can be regulated and controlled via said computer (7) by the driveline management system (8) by means of control signals sent by said management system (8), **characterised in that** the gearbox (5) is an automated or an automatic gearbox and that an electronic system (13) with a shift program is provided, whereby the shift program can be changed as a function of a current temperature of the exhaust-gas aftertreatment system (21) and that the current temperature of the exhaust-gas aftertreatment system (21) can be communicated to the driveline management system (8) in the form of signals by the electronic system (10) of said exhaust-gas aftertreatment system (21), from which driveline management system (8) the shift program of the electronic system (13) of the gearbox (5) can be triggered in the form of signals.

2. Driveline according to Claim 1, **characterised in that** the proportion of the emission-reduced working mode of the driveline is achieved essentially through the functional integration of the active exhaust-gas aftertreatment system (21) which can be actively controlled in its working behaviour via control signals sent by the driveline management system (8) to the vehicle computer (7) and to the electronics (10) of the exhaust-gas aftertreatment system (21) and that at least temperature statuses of the exhaust-gas aftertreatment system (21) can be controlled and regulated through the driveline management system (8).

3. Driveline according to one of the Claims 1 and 2, **characterised in that** the exhaust-gas aftertreatment system (21) can be controlled and/or regulated by changing the quantities of a reduction substance to be injected.

4. Driveline according to one of the Claims 1 and 2, **characterised in that** the exhaust-gas aftertreatment system (21) can be controlled and/or regulated by temporarily injecting additional additives into the exhaust-gas aftertreatment system (21) in order to lower the regeneration temperature of said aftertreatment system (21).

5. Driveline according to one of the Claims 1 and 2, **characterised in that** the exhaust-gas aftertreatment system (21) can be controlled and/or regulated by heating up the exhaust-gas aftertreatment system (21).

6. Driveline according to one of the Claims 1 and 2, **characterised in that** the exhaust-gas aftertreatment system (21) can be controlled and/or regulated by heating up the exhaust gases via correspondingly arranged heating devices.

7. Driveline according to one of the Claims 1 and 6, **characterised in that** the component-specific electronic systems (9 to 15) are interconnected and communicate with each other via a common data bus system (20), whereby the electronics (10) for the exhaust-gas aftertreatment system (21), an electronic system (12) for the electric motor-generator unit (3) and the electronic system (13) for the gearbox are provided and that in order to optimise the cold-start behaviour and to minimise the emissions of the combustion engine (1) the exhaust-gas aftertreatment system (21) connected with the combustion engine (1) can, if required, be generated by means of an electric motor-generator unit (3) and/or be provided from the electric energy storage system (6), whereby a necessary heat output for the exhaust-gas aftertreatment system (21) can be ascertained by the driveline management system (8) - as a function from maps (22, 24) and parameters stored in said management system (8) - and can be called up by the motor-generator unit (3) and/or the electric energy storage system (6) via the driveline management system (8), the vehicle computer (7), the data bus system (20) and their component-specific electronic systems (9 to 15) and an energy storage management system (14).

8. Driveline according to one of the Claims 1 and 7, **characterised in that** the driveline management system (8) functions autonomously and can additionally be influenced by means of vehicle-internal switching elements (27) and/or vehicle-external switching signals (16) in a traffic- and/or environment-oriented manner.

9. Driveline according to one of the Claims 1 and 8, **characterised in that** the vehicle-internal switching elements (27) are provided in the form of switches and the vehicle-external switching signals (16) in the form of telematic information senders and that the electric motor-generator unit (3) is supplied with energy from the electric energy storage system (6) for emission-free starting of the combustion engine (1) and/or driving the vehicle and/or units arranged away from the engine for short-periods and that an energy storage management system (14) associated to the component-specific electronic systems (9 to 15) guarantees a residual amount of energy in the electric energy storage system (6), which amount of energy is sufficient for the start and/or brief operation of the motor-generator unit (3) and/or the units (30, 31) and that secondary units (30) and/or optional additional units (31) are provided and can be supplied with energy via the electric energy storage system (6) when the internal combustion engine (1) is switched on or off.

10. Driveline according to one of the Claims 1 and 9, **characterised in that** in the event of traffic-related vehicle stops and or overrun conditions and idling operation the internal combustion engine (1) can be additionally switched off by the vehicle computer (7) and/or the driveline management system (8) via an EDC (Electronic Diesel Control) system (9) associated to the component-specific electronic systems (9 to 15) and that the internal combustion engine (1) can be started by the motor-generator unit (3) with energy from the electric energy storage system (6) if an operating element (17, 18) on board the vehicle and/or a safety-relevant signal from the vehicle computer (7) and/or from the driveline management system (8) are/is activated.

11. Driveline according to one of the Claims 1 and 10, **characterised in that** during vehicle deceleration brake energy can be converted into electric energy in the motor-generator unit (3), which electric energy can be stored in the electric energy storage system (6) and that the respective charge status of the electric energy storage system (6) can be monitored by the energy storage management system (14) and that - when a maximum charge condition of the electric energy storage system has been reached (6) and a constant actuation force has been applied to a brake pedal (17) - a brake force can be infinitely supplied from the motor-generator unit (3) to an EBS brake system (Electronic Braking System) (15) by means of the driveline management system (8).

12. Driveline according to one of the Claims 1, 10 and 11, **characterised in that** for the purpose of optimised recuperation of brake energy by means of the electric motor-generator unit (3) and the energy storage system (6) the (dis)engageable clutches (2, 4←) can be triggered at different speeds and that the closing speed of the clutches (2, 4) can be controlled by signals coming from the driveline management system (8) via the vehicle computer (7) and the data bus system (20), whereby for this purpose corresponding parameters (22, 23, 24) are stored in the driveline management system (8) and that the process for recuperating brake energy is deactivated during the actuation of clutches (2, 4).

13. Driveline according to one or several of the foregoing Claims 1 to 12, **characterised in that** in order to ensure that the clutches (2, 4) achieve high closing speeds the gearbox (5) can be synchronised by means of the motor-generator unit (3), whereby electrical energy between the motor-generator unit (3) and the electric energy storage system (6) can be exchanged and that for synchronising the gearbox (5) an electric signal can be sent from the driveline management system (8) to said gearbox (5) via the vehicle computer (7) and the data bus system (20), whereby this signal can be ascertained within the driveline management system (8) as a function of a position of the gear selection lever (26) and that for synchronising and closing the clutches (2, 4) signals are sent directly between the electronic system (12), the motor-generator unit (3) and the electronic system (13) of the gearbox (5).

14. Driveline according to one or several of the foregoing Claims 1 to 13, **characterised in that** accumulators and/or superconductors are provided as electric energy storage systems (6) and that, if necessary, the electric energy storage system (6) can be supplemented by fuel cells.

15. Driveline according to one or several of the foregoing Claims 1 to 13, **characterised in that** one of the clutches (4) is arranged between the motor-generator unit (3) and the gearbox (5) and that an optimum clutch (2) is arranged between the internal combustion engine (1) and the motor-generator unit (3) and that the motor-generator unit (3) is offset either coaxially or radially in relation to a crankshaft of the internal combustion engine (1) and that the internal combustion engine (1) can be switched off by means of an automatic start-stop system while the vehicle is at standstill and while the internal combustion engine (1) is running in overrun condition or is idling.

16. Driveline according to one or several of the foregoing Claims 1 to 13, **characterised in that** the function of the driveline management system (8) is, hierarchically speaking, superior to the function of the vehicle computer (7).

## Revendications

1. Chaîne cinématique d'un véhicule à moteur, constituée pour l'essentiel de composants agissant entre eux par entraînement tels qu'un moteur à combustion (19), une unité électrique moteur-alternateur (3), un accumulateur d'énergie électrique (6), une boîte de vitesses (5), au minimum un embrayage (2, 4), un ordinateur de véhicule (7), une gestion de la chaîne cinématique (8) ainsi que des appareils électroniques spécifiques aux composants (9 à 15), auquel cas un système actif de traitement postérieur des gaz d'échappement (21) supplémentaire est attribué aux composants agissant entre eux par entraînement, auquel cas tous les composants (1, 2, 3, 4, 5, 6), y compris le système actif de traitement postérieur des gaz d'échappement (21) sont reliés à l'ordinateur de véhicule (7) dans le but d'atteindre un cycle de travail réduisant de manière simultanée les émissions polluantes et la consommation de l'ensemble de la chaîne cinématique et peuvent être régulés et pilotés par le biais de l'ordinateur de véhicule (7) à partir de la gestion de la chaîne cinématique (8) au moyen de signaux de commande émis à cet endroit, **caractérisée par le fait que** la boîte de vitesses (5) est une boîte de vitesses automatisée ou automatique, **par le fait qu'**un appareil électronique (13) est prévu et que cet appareil présente un programme de passage de rapport pour la boîte de vitesses (5), auquel cas le programme de passage de rapport est modifiable en fonction d'une température momentanée du système de traitement postérieur des gaz d'échappement (21), et **par le fait que** la température momentanée du système de traitement postérieur des gaz d'échappement (21) est diffusable par son appareil électronique (10) par signaux à la gestion de la chaîne cinématique (8) à partir de laquelle le programme de passage de rapport de l'appareil électronique (13) de la boîte de vitesses (5) peut être commandé par signaux.

2. Chaîne cinématique selon la revendication 1, **caractérisée par le fait que** la part du cycle de travail de réduction des émissions polluantes de la chaîne cinématique est atteinte pour l'essentiel par l'intégration fonctionnelle du système de traitement postérieur des gaz d'échappement (21), lequel peut être piloté de manière active dans son comportement de travail par le biais de signaux de commande transmis de la gestion de la chaîne cinématique (8) à l'ordinateur du véhicule (7) et à l'appareil électronique (10) du système de traitement postérieur des gaz d'échappement (21), et **par le fait que** les états de température du système de traitement postérieur des gaz d'échappement (21) peuvent être régulés et pilotés grâce à la gestion de la chaîne cinématique (8).

3. Chaîne cinématique selon une des revendications 1 et 2, **caractérisée par le fait que** la commande et/ou la régulation du système de traitement postérieur des gaz d'échappement (21) a lieu par la modification des quantités d'injection à apporter à cet endroit d'un agent de réduction.

4. Chaîne cinématique selon la revendication 1 ou 2, **caractérisée par le fait que** la commande et/ou la régulation du système de traitement postérieur des gaz d'échappement (21) a lieu par l'injection cadencée d'additifs supplémentaires dans le système de traitement postérieur des gaz d'échappement (21) dans le but d'abaisser sa température de régénération.

5. Chaîne cinématique selon la revendication 1 ou 2, **caractérisée par le fait que** la commande et/ou la régulation du système de traitement postérieur des gaz d'échappement (21) a lieu par l'échauffement du système de traitement postérieur des gaz d'échappement (21).

6. Chaîne cinématique selon la revendication 1 ou 2, **caractérisée par le fait que** la commande et/ou la régulation du système de traitement postérieur des gaz d'échappement (21) a lieu par l'échauffement des gaz d'échappement par le biais de dispositifs de chauffage disposés en conséquence.

7. Chaîne cinématique selon une des revendications 1 à 6, **caractérisée par le fait que** les appareils électroniques spécifiques aux composants (9 à 15) sont reliés les uns aux autres en communiquant par un système commun de bus de données (20), auquel cas l'appareil électronique (10) est prévu pour le système de traitement postérieur des gaz d'échappement (21), un appareil électronique (12) pour l'unité électrique moteur-alternateur (3) et l'appareil électronique (13) pour la boîte de vitesses (5), et **par le fait que** le système de traitement postérieur de gaz d'échappement (21) relié au moteur à combustion (1) peut être produit, si nécessaire, à l'aide d'une unité électrique moteur-alternateur (3) afin d'optimiser le comportement au démarrage à froid et de minimiser les émissions polluantes du moteur à combustion (1), et/ou peut être mis à disposition à partir de l'accumulateur d'énergie électrique (6), auquel cas une puissance calorifique indispensable pour le système de traitement postérieur des gaz d'échappement (21) peut être déterminée par la gestion de la chaîne cinématique (8) en fonction des courbes caractéristiques (22, 24) et des paramètres mémorisées dans ce système de gestion et peut être requise de l'unité moteur-alternateur (3) et/ou de l'accumulateur d'énergie électrique (6) par l'intermédiaire de la gestion de la chaîne cinématique (8), de l'ordinateur de véhicule (7), du système de bus de données (20) et de ses appareils électroniques spécifiques aux composants (9 à 15) et de la gestion de l'accumulateur d'énergie (14).

8. Chaîne cinématique selon une des revendications 1 à 7, **caractérisée par le fait que** la gestion de la chaîne cinématique (8) présente un fonctionnement autonome et peut être influencée en fonction de la circulation routière et de l'environnement en supplément au moyen d'éléments de commande internes au véhicule (27) et/ou de signaux de commande externes au véhicule (16).

9. Chaîne cinématique selon une des revendications 1 à 8, **caractérisée par le fait que** les éléments de commande internes au véhicule (27) sont **caractérisés par** des contacteurs et les signaux de commande externes au véhicule (16) sont **caractérisés par** un émetteur d'informations télématiques, par le fait que l'unité électrique moteur-alternateur (3) fournit de l'énergie à partir de l'accumulateur d'énergie électrique (6) pour assurer un démarrage du moteur à combustion (1) sans produire d'émissions polluantes et/ou entraîner, pendant une courte durée, le véhicule et/ou des organes mécaniques (30, 31) disposés à une certaine distance du moteur, par le fait qu'une gestion de l'accumulateur d'énergie (14) faisant partie des appareils électroniques spécifiques aux composants (9 à 15) garantit une énergie résiduelle suffisante dans l'accumulateur d'énergie électrique (6) pour permettre le démarrage et/ou le fonctionnement de courte durée de l'unité moteur-alternateur (3) et/ou des organes mécaniques (30, 31), et par le fait que des organes auxiliaires (30) et/ou des organes mécaniques supplémentaires en option (31) sont prévus comme organes mécaniques (30, 31) et ceux-ci peuvent être alimentés en énergie électrique par l'intermédiaire de l'accumulateur d'énergie électrique (6) lorsque le moteur à combustion (1) est mis en marche ou arrêté.

10. Chaîne cinématique selon une des revendications 1 à 9, **caractérisée par le fait que** le moteur à combustion (1) peut être arrêté à partir de l'ordinateur du véhicule (7) et/ou la gestion de la chaîne cinématique (8) par le biais d'un système EDC (régulation électronique de l'injection diesel) (9) faisant partie des appareils électroniques spécifiques aux composants (9 à 15) lorsque le véhicule s'arrête à cause de la circulation routière et en régime de décélération et au ralenti et **par le fait que** le moteur à combustion (1) peut être démarré par de l'énergie provenant de l'accumulateur d'énergie électrique (6) par le biais de l'unité électrique moteur-alternateur (3) lorsqu'un élément de commande interne au véhicule (17, 18) est actionné et/ou lorsqu'un signal important pour la sécurité est activé à partir de l'ordinateur de véhicule (7) et/ou de la gestion de la chaîne cinématique (8).

11. Chaîne cinématique selon une des revendications 1 et 10, **caractérisée par le fait que**, lors du freinage du véhicule, une énergie de freinage peut être transformée en énergie électrique dans l'unité moteur-alternateur et que cette énergie électrique peut être stockée dans l'accumulateur d'énergie électrique (6), **par le fait que** l'état de charge momentané de l'accumulateur d'énergie électrique (6) peut être surveillé par la gestion de l'accumulateur d'énergie et **par le fait que**, lorsqu'un degré de charge maximal de l'accumulateur d'énergie (6) est atteint, une force de freinage peut être conduite progressivement au système de freinage EBS (système électronique de freinage) (15) par l'unité moteur-alternateur (3) au moyen de la gestion de la chaîne cinématique (8) en cas de force d'actionnement constante sur une pédale de frein (17).

12. Chaîne cinématique selon une des revendications 1, 10 et 11 mentionnées précédemment, **caractérisée par le fait que** les embrayages (2, 4) connectables ou déconnectables peuvent être pilotés rapidement de manière différente au moyen de l'unité électrique moteur-alternateur (3) et de l'accumulateur d'énergie (6) afin d'optimiser la récupération de l'énergie de freinage, **par le fait que** la vitesse de fermeture des embrayages (2, 4) peut être réglée par la gestion de la chaîne cinématique (8) par l'intermédiaire de l'ordinateur de véhicule (7) et du système de bus de données (20) de signaux entrant, auquel cas des paramètres correspondants (22, 23, 24) sont mémorisés pour cela dans la gestion de la chaîne cinématique (8) et **par le fait que** la récupération de l'énergie de freinage est désactivée pendant le processus d'actionnement des embrayages (2, 4).

13. Chaîne cinématique selon une ou plusieurs revendications 1 à 12 mentionnées précédemment, **caractérisée par le fait que** la boîte de vitesses (5) peut être synchronisée par l'unité moteur-alternateur (3) afin d'obtenir des vitesses élevées de fermeture des embrayages (2, 4), auquel cas l'énergie électrique peut être échangée entre l'unité moteur-alternateur (3) et l'accumulateur d'énergie électrique (6), **par le fait que**, pour pouvoir synchroniser la boîte de vitesses à celui-ci, un signal électrique peut être envoyé par la gestion de la chaîne cinématique (8) par l'intermédiaire de l'ordinateur de véhicule (7) et le système de bus de données (20), auquel cas ce signal peut être déterminé au sein de la gestion de la chaîne cinématique (8) en fonction de la position du levier de changement de vitesse (26) et **par le fait qu'**il existe une transmission directe des signaux entre l'appareil électronique (12), l'unité moteur-alternateur (3) et l'appareil électronique (13) de la boîte de vitesses (5) dans le but de synchroniser et de fermer les embrayages (2, 4).

14. Chaîne cinématique selon une ou plusieurs revendications 1 à 13 mentionnées précédemment, **caractérisée par le fait que** des batteries et/ou des supercondensateurs sont prévus comme accumulateur d'énergie électrique (6) et **par le fait que** l'accumulateur d'énergie électrique (6) est, le cas échéant, complété par des piles à combustible.

15. Chaîne cinématique selon une ou plusieurs revendications 1 à 13 mentionnées précédemment, **caractérisée par le fait qu'**un embrayage (4) est disposé entre l'unité moteur-alternateur (3) et la boîte de vitesses (5), **par le fait qu'**un embrayage optimal (2) est disposé entre le moteur à combustion (1) et l'unité moteur-alternateur (3), **par le fait que** l'unité moteur-alternateur (3) peut être disposée de manière déplacée soit coaxialement soit radialement par rapport à un vilebrequin du moteur à combustion (1) et **par le fait qu'**un arrêt du moteur à combustion (1) peut être réalisé par un dispositif automatique de démarrage-arrêt pendant l'immobilisation du véhicule ainsi qu'en régime de décélération et au ralenti.

16. Chaîne cinématique selon une des revendications 1 à 13 mentionnées précédemment, **caractérisée par le fait que** le fonctionnement de la gestion de la chaîne cinématique (8) est placé hiérarchiquement au-dessus du fonctionnement de l'ordinateur de véhicule (7).
